# EUROPÄISCHE PATENTSCHRIFT

(11) **EP 2 878 353 B1**
(45) Veröffentlichungstag und Bekanntmachung des Hinweises auf die Patenterteilung: **13.11.2019**
(21) Anmeldenummer: 14001407.7
(22) Anmeldetag: 17.04.2014
(51) Int. Cl.: B01D 45/08

(54) **TROPFENABSCHEIDER**
DROPLET SEPARATOR
PARE-GOUTTE

(30) Priorität: 03.08.2013 DE 102013012965
(43) Veröffentlichungstag der Anmeldung: 03.06.2015
(73) Patentinhaber: FläktGroup Deutschland GmbH, 44625 Herne (DE)
(72) Erfinder: Fieberg, Christian, 45966 Gladbeck (DE)
(74) Vertreter: Cohausz Hannig Borkowski Wißgott

(56) Entgegenhaltungen:
- EP-A1- 0 269 864
- EP-A1- 1 262 223
- DE-A1-102011 081 667
- DE-U1-202008 016 962
- US-A- 2 967 586

## Beschreibung

Die Erfindung betrifft eine Vorrichtung zum Abscheiden von Tropfen aus dem Luftstrom hinter einem Klima-, Kühl- und/oder Lüftungsgerät, mit mehreren, zueinander parallel angeordneten, Tropfen abfangenden Lamellen, zwischen denen die Luft hindurchströmt.

Bei bekannten Tropfenabscheidern befinden sich die die Tropfen abfangenden Lamellen in einer zur Luftströmung quer angeordneten, ein Paket bildenden Schicht. Bei einer solchen paketförmigen Schicht hat sich gezeigt, dass nicht alle Tropfen abgefangen werden. Dies liegt u. a. daran, dass aufgrund von Temperaturschichtungen der Luft nach dem Kühler eine Temperaturverteilung am Abscheider entsteht. Diese führt durch Wärmeleitung in den Lamellen zu erneuter Kondensation auf der Rückseite des Abscheiders insbesondere auf der Rückseite der Lamellen. Die dort kondensierten Tropfen werden durch den Luftstrom mitgerissen.

Solche, vom Tropfenabscheider nicht erfassten Tropfen können u.a. einen nachgeschalteten Ventilatormotor zerstören. Eine wesentlich höhere Abscheideleistung kann dadurch erreicht werden, dass hinter der Lamellenschicht eine zweite, ein Paket bildende Lamellenschicht im Luftstrom angeordnet wird. Dies führt aber zu einem zusätzlichen Platzbedarf, Mehrkosten und erhöhten Druckverlusten.

Aus der EP 0 269 864 A1 ist eine Filtervorrichtung für Gase bekannt mit Filterflächen, die von einer Filterflüssigkeit durchtränkt sind. Hierbei kann das zu filternde Gas Tröpfchen aus den Filterflächen mitreißen, die von einem Gitternetzwerk aufgefangen werden. Die von dem Gitternetzwerk nicht aufgefangenen Tröpfchen stoßen gegen eine Prallkappe, die eine Gasaustrittsöffnung abdeckt, um ein Austreten der Tröpfchen durch die Gasaustrittsöffnung zu verhindern.

Aufgabe der Erfindung ist es, eine Vorrichtung zum Abscheiden von Tropfen der eingangs genannten Art so zu verbessern, dass bei minimalem Platzbedarf eine fast einhundertprozentige Abscheiderate erreicht wird.

Diese Aufgabe wird erfindungsgemäß dadurch gelöst,
- dass in Strömungsrichtung direkt hinter den Lamellen mindestens ein Prallblech angeordnet ist, auf das die Tropfen des Luftstroms treffen, um an dem Prallblech nach unten zu gleiten,
- dass das Prallblech gegenüber dem Tropfenabscheider derart geneigt ist, dass sein unterer Rand näher dem Tropfenabscheider ist als sein oberer Rand,
- dass die Höhe des Prallblechs geringer ist als die Hälfte der Höhe des Tropfenabscheiders,
- dass das Prallblech mit seinem unteren Rand in Höhe des unteren Randes des Tropfenabscheiders angeordnet ist.

Ein in Strömungsrichtung hinter dem Lamellenpaket angeordnetes Prallblech fängt die Wassertropfen ab, die entweder von den Lamellen nicht erfasst wurden oder an den Lamellen erzeugt wurden und von den hinteren Lamellenkanten abreißen. Hierbei benötigt ein solches Prallblech bei geringem Herstellungs- und Montageaufwand nur wenig Bauraum, so dass die Baulänge sich nicht oder nur wenig erhöht.

Um die Tropfen dort abzufangen, wo sie im Wesentlichen entstehen, wird vorgeschlagen, dass das Prallblech innerhalb der unteren Hälfte, dem unteren Drittel oder dem unteren Viertel des Tropfenabscheiders angeordnet ist. Dabei ist von Vorteil, wenn das Prallblech mit seinem unteren Rand am unteren Rand des Tropfenabscheiders befestigt ist. Vorzugsweise wird vorgeschlagen, dass das Prallblech eben ist oder seine dem Tropfenabscheider zugewandte Seitenfläche konkav gewölbt ist.

Um die Tropfenabscheideleistung des Prallblechs oder der Prallbleche zu erhöhen und den Widerstand in der Luftströmung zu verringern, wird vorgeschlagen, dass das Prallblech eine hohe Anzahl von Öffnungen insbesondere von Sieböffnungen aufweist. Hierbei sollte jedes Prallblech eine hohe Anzahl von Schlitzen aufweisen. Auch ist von Vorteil, wenn die Schlitze quer zur Schwerkraftrichtung insbesondere waagerecht angeordnet sind.

Vorzugsweise wird vorgeschlagen, dass die Lamellen als Lamellenpaket von einem Rahmen umfasst sind.

Vorteilhafte Ausführungsbeispiele der Erfindung werden im Folgenden näher beschrieben. Es zeigen
- Figur 1: eine schematische Darstellung eines Klima- oder Kühlgerätes mit ungekrümmtem Prallblech,
- Figur 2: eine schematische Darstellung eines Klima- oder Kühlgerätes mit gekrümmtem Prallblech,

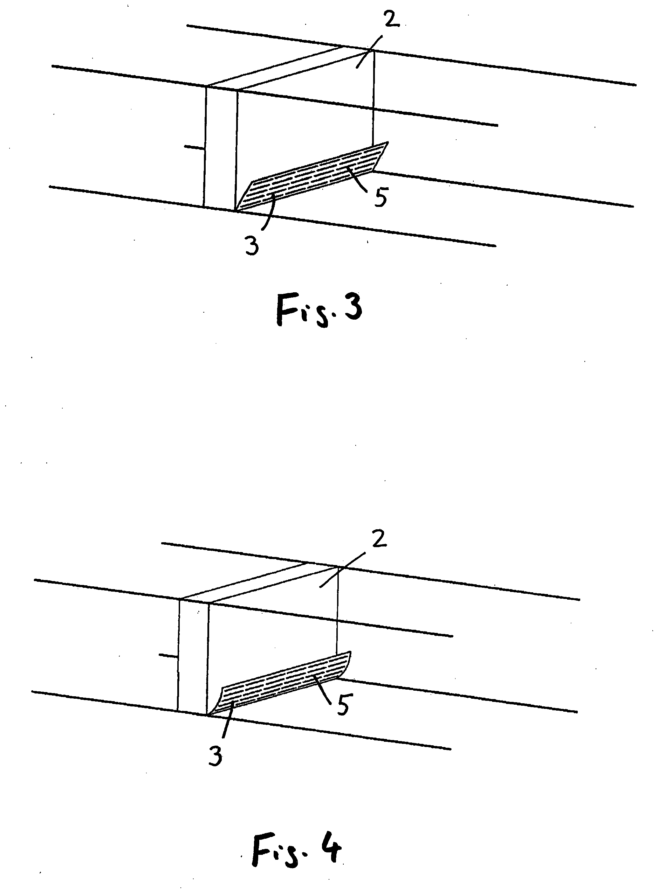

- Figur 3: eine perspektivische Darstellung des Tropfenabscheiders mit geradem Prallblech,
- Figur 4: eine perspektivische Darstellung des Tropfenabscheiders mit konkavem Prallblech,
- Figur 5: einen Tropfenabscheider in Schrägstellung.

Im von einem Ventilator/Lüfter 4 erzeugten Luftstrom hinter dem Kühler 1 eines Klimagerätes, Kühlgerätes oder Lüftungsgerätes ist ein Tropfenabscheider 2 angeordnet, der als Paket mehrere zueinander parallele Lamellen aufweist, die im Querschnitt vorzugsweise jeweils ein wellenförmiges Profil besitzen und vorzugsweise von einem Rahmen umgeben sind. Im Luftstrom direkt hinter dem Lamellenpaket ist mindestens ein Prallblech 3 derart schräg befestigt, dass der untere Rand des Prallblechs näher dem unteren Rand des Klima- oder Kühlgerätes ist als der obere Rand. Vorzugsweise ist der untere Rand am Gerät unten befestigt.

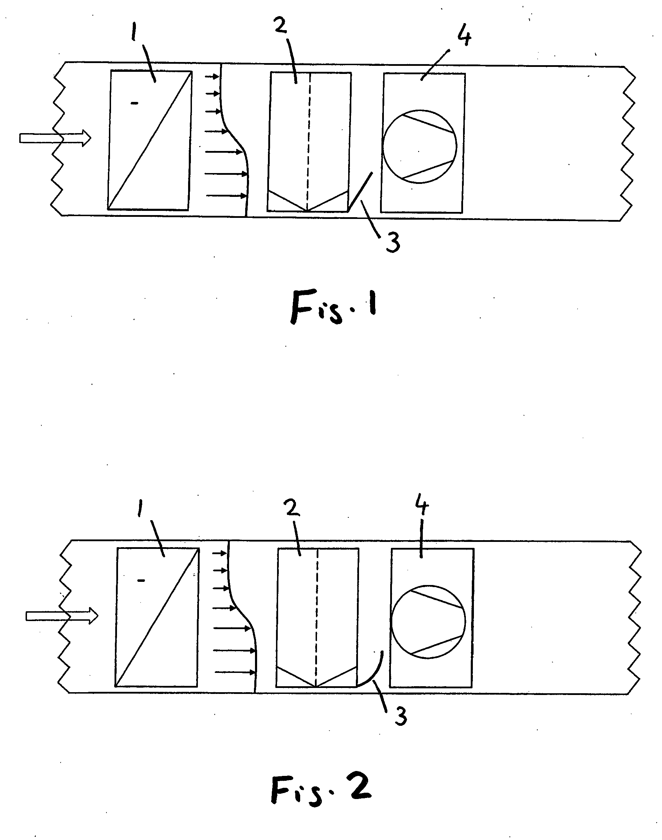

Das Prallblech 3 hat vorzugsweise, wie in Fig. 1 gezeigt, eine ebene Form oder wie in Fig. 2 gezeigt eine konkav gekrümmte Form und besitzt in einer Ausführung eine Vielzahl von Öffnungen 5 regelmäßig über die Prallblechfläche verteilt. Hierdurch ist das Prallblech vorzugsweise von einem Siebblech bzw. von einem einem Siebblech ähnlichen Blech gebildet. Dabei wird eine besonders hohe Abscheideleistung bei geringem Luftwiderstand erreicht, wenn die Öffnungen 5 schlitzförmig sind. Hierbei sind die Schlitze quer zur Schwerkraftrichtung insbesondere waagerecht angeordnet.

Die Höhe des Prallblechs 3 ist geringer als die Hälfte der Höhe des Tropfenabscheiders 2. Insbesondere ist das Prallblech 3 innerhalb der unteren Hälfte, dem unteren Drittel oder dem unteren Viertel des Tropfenabscheiders 2 angeordnet.

Die vom Prallblech 3 aufgefangenen Wassertropfen verbleiben auf dem Prallblech und fließen an diesem nach unten, um an der Paketunterseite abzutropfen, ohne vom Luftstrom mitgerissen zu werden. Diese Funktion wird noch dadurch sicherer gestellt, dass die Lamellen insbesondere als Lamellenpaket entgegen der Strömungsrichtung um 5 bis 30 Grad insbesondere um 10 bis 15 Grad geneigt sind. Hierbei wird das obere Ende jeder Lamelle früher vom Luftstrom erfasst als das untere Lamellenende.

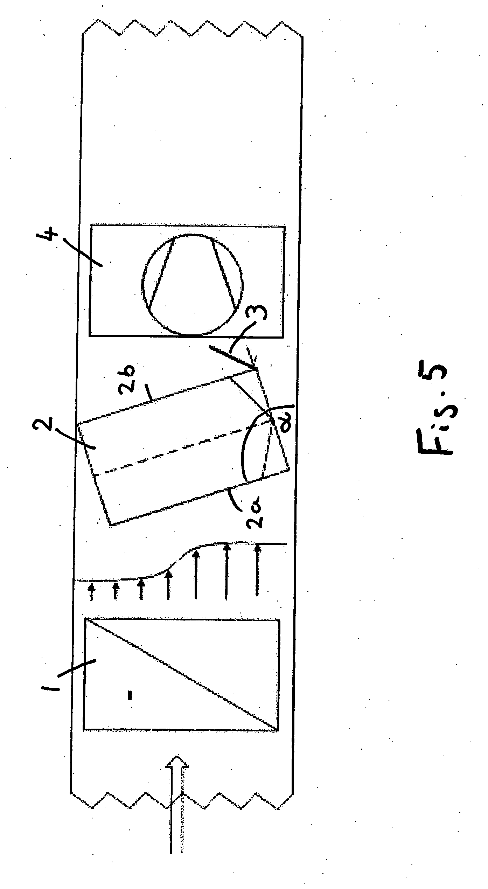

In Fig. 5 ist ein Tropfenabscheider in Schrägstellung dargestellt, bei dem seine üblicherweise senkrechte Eingangs- und Ausgangsebene 2a und 2b einen Winkel α ungleich 90 Grad gegenüber der Waagerechten bilden, insbesondere einen Winkel α von 95 bis 120 Grad, vorzugsweise von 100 bis 105 Grad.

## Patentansprüche

1. Vorrichtung zum Abscheiden von Tropfen aus dem Luftstrom hinter einem Klima-, Kühl- und/oder Lüftungsgerät, mit mehreren, zueinander parallel angeordneten, Tropfen abfangenden Lamellen, zwischen denen die Luft hindurchströmt, **dadurch gekennzeichnet,**
- **dass** in Strömungsrichtung direkt hinter den Lamellen mindestens ein Prallblech (3) angeordnet ist, auf das die Tropfen des Luftstroms treffen, um an dem Prallblech nach unten zu gleiten,
- **dass** das Prallblech (3) gegenüber dem Tropfenabscheider (2) derart geneigt ist, dass sein unterer Rand näher dem Tropfenabscheider ist als sein oberer Rand,
- **dass** die Höhe des Prallblechs (3) geringer ist als die Hälfte der Höhe des Tropfenabscheiders (2),
- **dass** das Prallblech (3) mit seinem unteren Rand in Höhe des unteren Randes des Tropfenabscheiders (2) angeordnet ist.

2. Vorrichtung nach Anspruch 1, **dadurch gekennzeichnet, dass** das Prallblech (3) innerhalb der unteren Hälfte, dem unteren Drittel oder dem unteren Viertel des Tropfenabscheiders (2) angeordnet ist.

3. Vorrichtung nach Anspruch 1 oder 2, **dadurch gekennzeichnet, dass** das Prallblech (3) mit seinem unteren Rand am unteren Rand des Tropfenabscheiders (2) befestigt ist.

4. Vorrichtung nach einem der vorherigen Ansprüche, **dadurch gekennzeichnet, dass** das Prallblech eben ist oder seine dem Tropfenabscheider zugewandte Seitenfläche konkav gewölbt ist.

5. Vorrichtung nach einem der vorherigen Ansprüche, **dadurch gekennzeichnet, dass** das Prallblech (3) eine hohe Anzahl von Öffnungen insbesondere von Sieböffnungen aufweist.

6. Vorrichtung nach einem der vorherigen Ansprüche, **dadurch gekennzeichnet, dass** das Prallblech (3) eine hohe Anzahl von Schlitzen aufweist.

7. Vorrichtung nach Anspruch 6, **dadurch gekennzeichnet, dass** die Schlitze quer zur Schwerkraftrichtung insbesondere waagerecht angeordnet sind.

8. Vorrichtung nach einem der vorherigen Ansprüche, **dadurch gekennzeichnet, dass** die Lamellen ein Lamellenpaket bilden.

9. Vorrichtung nach Anspruch 8, **dadurch gekennzeichnet, dass** das Lamellenpaket von einem Rahmen umfasst ist.

## Claims

1. Device for separating droplets from the air stream behind an air-conditioning, cooling and/or ventilation unit, having multiple droplet-catching lamellae which are arranged parallel to one another and between which the air flows through, **characterized**
- **in that**, directly behind the lamellae in the flow direction, there is arranged at least one impact plate (3) against which the droplets of the air stream impinge in order to slide downwards on the impact plate,
- **in that** the impact plate (3) is inclined with respect to the droplet separator (2) such that its lower edge is closer to the droplet separator than its upper edge,
- **in that** the height of the impact plate (3) is less than half the height of the droplet separator (2),
- **in that** the impact plate (3) is arranged with its lower edge at the height of the lower edge of the droplet separator (2).

2. Device according to Claim 1, **characterized in that** the impact plate (3) is arranged within the lower half, the lower third or the lower quarter of the droplet separator (2).

3. Device according to Claim 1 or 2, **characterized in that** the impact plate (3) is fastened by its lower edge on the lower edge of the droplet separator (2).

4. Device according to one of the preceding claims, **characterized in that** the impact plate is planar, or the side surface thereof facing the droplet separator is concavely curved.

5. Device according to one of the preceding claims, **characterized in that** the impact plate (3) has a large number of openings, in particular screen openings.

6. Device according to one of the preceding claims, **characterized in that** the impact plate (3) has a large number of slots.

7. Device according to Claim 6, **characterized in that** the slots are arranged transversely with respect to the direction of gravitational force, in particular horizontally.

8. Device according to one of the preceding claims, **characterized in that** the lamellae form a lamellae pack.

9. Device according to Claim 8, **characterized in that** the lamellae pack is surrounded by a frame.

## Revendications

1. Dispositif de séparation de gouttelettes du flux d'air à l'arrière d'un appareil de climatisation, de refroidissement et/ou de ventilation, le dispositif comprenant une pluralité de lamelles qui capturent les gouttelettes, qui sont disposées parallèlement les unes aux autres et entre lesquelles l'air circule, **caractérisé en ce que**
- au moins une plaque déflectrice (3), à laquelle les gouttelettes du flux d'air sont incidentes, est disposée directement derrière des lamelles, dans la direction d'écoulement, pour glisser vers le bas sur la plaque déflectrice,
- la plaque déflectrice (3) est inclinée par rapport au séparateur de gouttelettes (2) de telle sorte que son bord inférieur soit plus proche du séparateur de gouttelettes que son bord supérieur,
- la hauteur de la plaque déflectrice (3) est inférieure à la moitié de la hauteur du séparateur de gouttelettes (2),
- la plaque déflectrice (3) est disposée de telle sorte que son bord inférieur se trouve à hauteur du bord inférieur du séparateur de gouttelettes (2).

2. Dispositif selon la revendication 1, **caractérisé en ce que** la plaque déflectrice (3) est disposée dans la moitié inférieure, le tiers inférieur ou le quart inférieur du séparateur de gouttelettes (2).

3. Dispositif selon la revendication 1 ou 2, **caractérisé en ce que** la plaque déflectrice (3) est fixée de telle sorte que son bord inférieur se trouve au niveau du bord inférieur du séparateur de gouttelettes (2).

4. Dispositif selon l'une des revendications précédentes, **caractérisé en ce que** la plaque déflectrice est plane ou sa surface latérale, faisant face au séparateur de gouttelettes, est incurvée de manière concave.

5. Dispositif selon l'une des revendications précédentes, **caractérisé en ce que** la plaque déflectrice (3) comporte un grand nombre d'ouvertures, en particulier d'ouvertures de tamisage.

6. Dispositif selon l'une des revendications précédentes, **caractérisé en ce que** la plaque déflectrice (3) comporte un grand nombre de fentes.

7. Dispositif selon la revendication 6, **caractérisé en ce que** les fentes sont disposées transversalement à la gravité, notamment horizontalement.

8. Dispositif selon l'une des revendications précédentes, **caractérisé en ce que** les lamelles forment un paquet de lamelles.

9. Dispositif selon la revendication 8, **caractérisé en ce que** le paquet de lamelles est entouré d'un cadre.
